# EUROPEAN PATENT APPLICATION

(11) **EP 2 806 536 A1**
(43) Date of publication of application: **26.11.2014**
(21) Application number: 13168548.9
(22) Date of filing: 21.05.2013
(51) Int. Cl.: H02K 1/18

(54) **Electric machine**

(71) Applicant: Siemens Aktiengesellschaft, 80333 München (DE)
(72) Inventor: Semmer, Silvio, 4051 Basel (CH)

(57) **Abstract**

The invention relates to an improved electric machine.

An electric machine comprises a support structure, a winding, a stack of lamination that is arranged along the winding and supports the winding.

A stack of lamination is build of electrically insulated lamination plates, and forms an electromagnetically active length along the winding.

The electric machine comprises an end plate, whereby the end plate is arranged at an end of the stack of lamination and is connected to the support structure. The end plate is arranged along the winding and supports the winding. The stack of lamination is fixed in his position relative to the support structure by the end plate.

The end plate is laminated and comprises a plurality of lamination plates. The plurality of lamination plates of the end plate are at least in the zone adjoining the winding electrically insulated from each other so that they contribute to the electromagnetically active length along the winding of the electric machine.

## Description

The invention relates to an improved electric machine.

An electric machine comprises a rotor and a stator.

The electric machine is equipped with windings. These windings are made of copper or of aluminum. The windings are embedded in grooves in the material of the stator and/or the rotor, or in openings in the material, like through-going holes, like a tunnel or a duct.

The material of the stator and/or the rotor is made from metal. Eddy currents are generated in this metal structure during the operation of the electric machine. Eddy currents lead to a loss of electric energy and increase the heat in the material. Thus the electric machine needs sufficient cooling in addition.

The material of the stator and sometimes also the rotor is made of a stack of lamination. The lamination comprises a stack of mostly identically shaped plates.

The stack of laminated plates is held together and in place by end plates, also called finger plates. The end plates are arranged one on each side of the lamination plates and are connected to each other by bolts leading through the stack of lamination plates. The bolts connect the end plates and press the stack of lamination together, so that the lamination plates cannot shift. The end plates are fixed to a support structure that carries the lamination and the windings.

The end plates are mostly manufactured of a solid material and are welded to the support structure.

It is known from DE 2901751 C2 to construct end plates as a stack of lamination plates. This shows the advantage that the lamination plates used for the end plates have the same shape as the lamination plates used in the stack of lamination plates between the end plates. This makes the production of the end plates easier. They are build of a number of lamination plates and are welded together to form a rigid end plate.

The windings of the electric machine lead through the end plates at the two ends of the lamination and form the winding overhang.

While the area of the lamination plates accounts to the active length of the electric machine, the end plates do not contribute to the active length. The end plates show excessive eddy currents with high electric losses.

Thus the length of the winding that leads through the end plate can not be used for the purpose of the electric machine.

This shows the disadvantage that a certain mass of copper or aluminum is only used to bridge the end plates with no effect on torque or production of electric energy.

It is the aim of the invention to provide an improved electric machine where less winding material is needed to bridge the end plates.

The aim is reached by the subject matter according to the independent claims. Preferred embodiments of the invention are described in the dependent claims.

An electric machine comprises a support structure, a winding, a stack of lamination that is arranged along the winding and supports the winding.

A stack of lamination is build of electrically insulated lamination plates, and forms an electromagnetically active length along the winding.

The electric machine comprises an end plate, whereby the end plate is arranged at an end of the stack of lamination and is connected to the support structure. The end plate is arranged along the winding and supports the winding. The stack of lamination is fixed in his position relative to the support structure by the end plate.

The end plate is laminated and comprises a plurality of lamination plates. The plurality of lamination plates of the end plate are at least in the zone adjoining the winding electrically insulated from each other so that they contribute to the electromagnetically active length along the winding of the electric machine.

A stack of lamination comprises a plurality of lamination plates. The lamination plates are electrically insulated in respect to each other and are arranged to form the stack of lamination.

The stack of lamination is build of insulated lamination plates to avoid eddy currents in the electric machine. Eddy currents cause losses and produce excess heat in the electric machine.

A stack of lamination forms an electromagnetically active length along the winding. The stack of lamination is arranged along the winding. The winding is arranged in a groove or indentation in the lamination or in a through-going opening like a tunnel though the lamination plates.

The electromagnetically active length along the winding is the length of the winding producing torque in the electric machine.

At the end of a stack of lamination an end plate is arranged to hold the stack of lamination. The end plate is connected to the support structure. To hold the stack of lamination the end plate needs to be rigid. The end plate is arranged along the winding and support the winding. The winding is supported in a groove or indentation in the end plate or in a through-going hole like a tunnel.

The end plate is laminated and comprises a plurality of lamination plates. The lamination plates of the end plates are electrically insulated from each other.

The lamination plates are insulated from each other at least in a zone adjoin the winding. Thus there is no electrically conductive connection between the lamination plates. Thus eddy currents can be suppressed and the electric losses in the electric machine are minimized.

Thus the end plates contribute to the active length along the winding of the electric machine. Thus the laminated end plate contributed to the production of torque in a winding. Thus, for the same amount of power produced in the electric machine, the length of the winding corresponding to the thickness of a normal end plate can be spared.

Thus the winding of the electric machine can be build shorter. The winding of an electric machine is normally built of aluminum or copper. Thus material like aluminum or copper is saved.

In addition the overall length of the electric machine can be reduced. Thus weight of the electric machine is saved.

The plurality of lamination plates of the end plate are glued together to form a rigid end plate. A glued connection is a very rigid connection. Thus the glued connection between the lamination plates building the end plate, leads to an end plate showing the same mechanical properties as a solid end plate.

A glued connection provides the possibility of an electrically insulated connection between the lamentation plates. Thus the end plates are connected electrically insulated and the connection is a rigid connection with a high mechanical stiffness of the end plate.

Two end plates at the ends of a stack of lamination are connected by a bolt going through the stack of lamination. The end plates are connected to the support structure and hold the stack of lamination in place.

The end plates are connected by a bolt. The bolt is going through a hole in a stack of lamination. Thus the end plates are connected, and are pressed together by the bolt going through the stack of lamination.

Thus the stack of lamination is pressed together and is clamped between the end plates.

The bolt is electrically insulated from the lamination plates and the end plates. Thus an electrical connection between the lamination plates, or the end plates and the lamination plates, is avoided. Thus eddy currents in the electric machine are minimized. Thus the development of excess heat is minimized.

The lamination plates and the end plates comprise a zone that adjoins the winding and a zone that adjoins to a support structure and that the bolt is arranged in the zone adjoining to the support structure.

The lamination plates and the end plates comprise a zone that adjoins the winding. This is the zone of the end plates and the lamination plates were a winding is embedded. This zone comprises indentations or grooves where the winding is supported.

The end plates are connected to the support structure. Thus the end plates comprise a zone that adjoins to the support structure. This is the zone of the end plates neighboring the support structure.

The lamination plates are arranged along a winding and comprise one surface that faces the support structure. The zone neighboring to this surface is the zone that adjoins to the support structure.

The bolt is arranged in the zone adjoining to the support structure. Especially in the zone adjoining to the winding eddy currents are unwanted. Due to electromagnetic fields eddy currents are induced in the bolt. Thus the eddy current in the bolt produce excess heat. Excess heat is unwanted in the zone that adjoins the winding.

The bolt is arranged and the zone that adjoins to the support structure. Thus the excess heat is not produced within the zone that adjoins to the winding.

The lamination plates of the end plates are of the same shape than the lamination plate of the stack of lamination. Thus the lamination plates of the end plated are produced to the same tool than the lamination plate of the stack of lamination. Thus the production process is easier and cheaper.

The end plate is a part of a stator of the electric machine. An electric machine comprises a rotor and a stator. The stator is connected to the support structure.

The stator of the electric machine comprises a laminated end plate. The laminated end plate contributes to the electromechanically length along the winding. Thus the overall length of the stack of lamination, including the end plates, can be kept shorter. Thus material and costs are saved. In addition the weight of the electric machine is reduced.

The stator is segmented so that a number of stator segments build the stator of the electric machine. Thus the stator is modularized and the modules of the stator can be built separately and independently.

The lamination plates, used for the stack of lamination and the end plates, are dimensioned and produced for segments of the stator. Thus the lamination plates are smaller and lighter then for a full stator. Thus the handling of the lamination plates during production and installation is easier. Thus the use of heavy machinery during production is avoided. Thus production costs are saved.

The electric machine is used as a generator in a direct driven wind turbine. Direct driven wind turbines require generators with a large diameter. Especially in direct driven wind turbines at a multi-megawatt range, the electric generator of the direct driven wind turbine is very heavy.

Thus material and weight of the electric generator can be saved by reducing the overall length of the generator. Thus the weight of the support structure carrying the generator can be reduced. In addition weight and material of the tower of the wind turbine can be reduced.

The end plate of the electric machine comprises preferably more than 10 lamination plates, most preferably 15 lamination plates.

The end plate or the electric machine comprises lamination plates of a thickness between 0,75 mm and 2 mm, preferably of 1mm to 2mm.

The invention is shown in more detail by the help of figures. The figures show a preferred configuration and do not limit the scope of the invention.
- FIG 1: shows a part of an electric machine
- FIG 2: shows an end plate
- FIG 3: shows a support structure
- FIG 4: shows a support structure with an end plate
- FIG 5: shows a part of an electric machine according to the prior art
- FIG 6: shows a comparison of an inventive part of an electric machine and a part of an electric machine according to the prior art

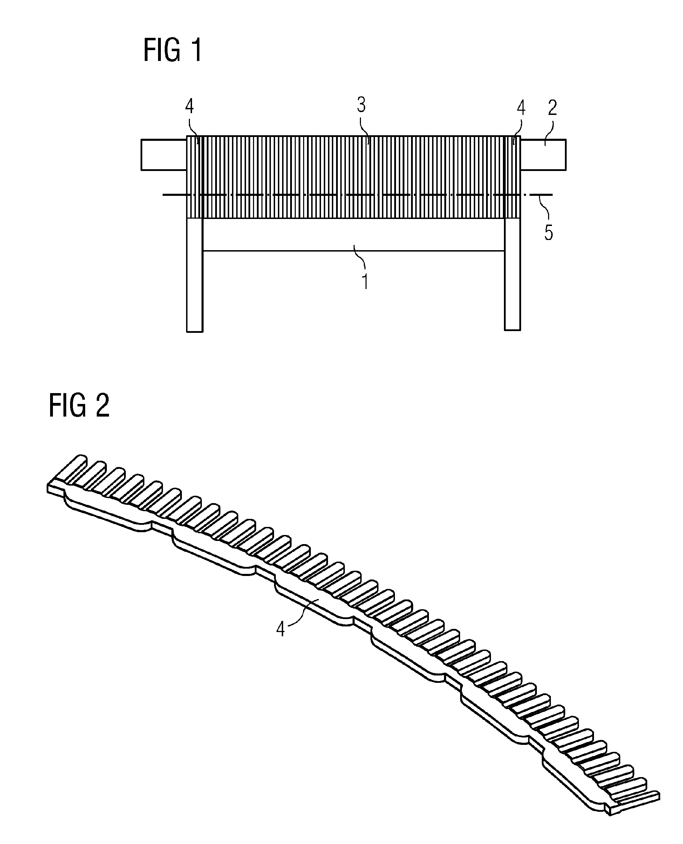

FIG 1 shows a part of an electric machine.

FIG 1 shows a part of an electric machine. The part comprises a support structure 1 and a stack of lamination 3.

A winding 2 is embedded in the stack of lamination 3. The stack of lamination 3 supports the winding 2. The stack of lamination comprises a zone that adjoins the winding 2. This is the part of the stack of lamination 3 that is close to the winding 2.

The end plates 4 are arranged at the two ends of the stack of lamination 3. The end plates 4 are connected to the support structure 1. The end plates 4 hold the stack of lamination 3 in a certain predetermined position in relation to the support structure of the electric machine.

In addition the end plates 4 support the winding 2. The end plates comprise a zone that adjoins the winding 2. This is the part of the end plate 4 that is close to the winding 2.

The lamination plates of the stack of lamination 3 can be connected together and can be kept in place by a bolt. The bolt 5 can be arranged through the end plates 4 and the stack of lamination at the position 5.

The bolt 5 is arranged in a zone in the stack of lamination 3 and the end plates 4 that is close to the support structure 1

The end plates 4 comprise a plurality of lamination plates that are connected in a mainly insulated way.

The end plates comprise 10 to 15 lamination plates that are glued together to provide an electrically insulated connection.

FIG 2 shows an end plate.

FIG 2 shows an end plate 4 of an electric machine. The electric machine in this example is segmented. A number of segments are arranged to build a rotor or a stator of the electric machine.

The end plate 4 comprises a series of indentations and dents. A winding is later arranged in an indentation. A dent is then located between two windings. The end plate 4 supports the winding 2 in the indentations.

The lamination plates of the stack of lamination show also a series of dents and indentations, whereby the windings are arranged and supported in the indentations.

The dents of the end plates are used to hold the dents of the lamination plates of the stack of lamination in place.

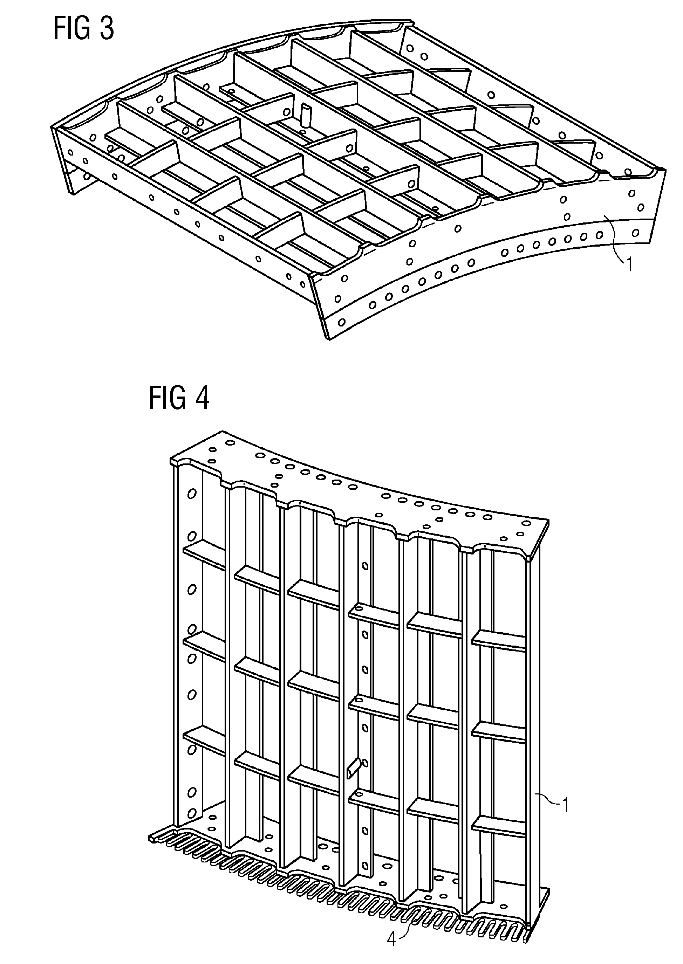

FIG 3 shows a support structure

FIG 3 shows a support structure 1 of a part of an electric machine. The part of the electric machine is a segment of a stator or a rotor. A number of segments are arranged next to each other to form a stator of a rotor.

The support structure 1 comprises a frame that is prepared to hold the end plated and the stack of lamination.

When used in a wind turbine, the support structure 1 is a part of a stator, for example, and is connected to the stationary part of the wind turbine.

FIG 4 shows a support structure with an end plate.

FIG 4 shows an end plate 4 that is connected to the support structure 1.

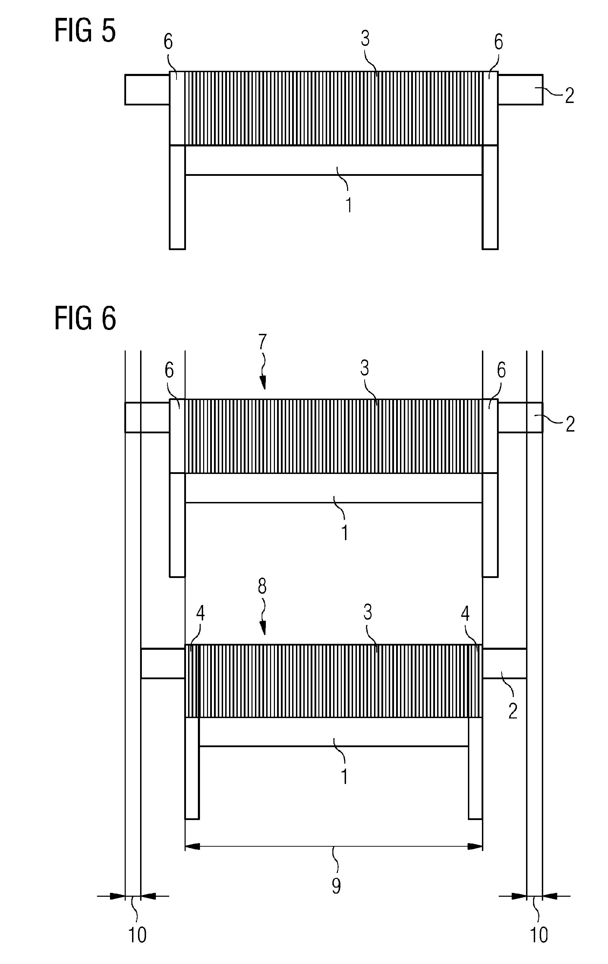

FIG 5 shows a part of an electric machine according to the prior art

FIG 5 shows a part of an electric machine, as it is known from the prior art. The part of the electric machine comprises a support structure 1, a winding 2 and a stack of lamination 3. The windings are arranged in an indentation of the stack of lamination 3. Thus the lamination plates of the stack of lamination 3 are arranged along the winding 2.

End plates 6 are arranged at the ends of the stack of lamination 3. The end plates 6 are used to hold the lamination plates in the stack of lamination 3 together and connect the stack of lamination 3 to the support structure 1.

The stack of lamination 3 and the end plates 6 support the winding 2.

The end plates 6 are made of a solid material. E.g. they are casted of iron. The end plates 6 are connected to the support structure. This connection is, for example, a welded connection.

Eddy currents are induced in the end plates 6, when the electric machine is in operation. The eddy currents increase the temperature in the end plates, and thus increase the temperature in the electric machine.

The stack of lamination 3 is forming an electromagnetically active length along the winding 2. The end plates 6 increase the losses in the electric machine and do not contribute to the active length of the electric machine.

FIG 6 shows a comparison of an inventive part of an electric machine and a part of an electric machine according to the prior art.

FIG 6 shows a part of an electric machine as shown in FIG 5 in comparison to a part of an electric machine according to the invention as shown in FIG 1.

The arrangement 7 shows the part of the electric machine as it is known form the prior art.

The arrangement 8 shows the part of the electric machine according to the claims.

The stack of lamination 3 arranged along the winding 2 contributes to an active stack length 9.

In the arrangement 7 the end plates 6 do not contribute to the active stack length 9. Eddy currents are induced in the end plates 6 and lead to electric losses and to excessive heat in the electric machine.

In the arrangement 8 the end plates 4 are laminated and electrically insulated in a way that they show the same electrical properties as the stack of lamination 3.

Thus the end plates 4 contribute to the active length 9 of the stack of lamination 3. The losses of the electric machine are reduced. Thus the part of the electric machine of the arrangement 8 is shorter in length at each side by the distance 10, then the part of the prior art, while it shows the same degree of efficiency then the prior art.

Due to the shorter length the winding 2 of the arrangement 8 are shorter. A winding 2 is normally made of copper or aluminum. Copper and aluminum are expensive and heavy materials.

Thus with a shorter length of the winding 2, shown by the distance 10 on each side of the winding, costs and weight are saved.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Electric machine, comprising
- a support structure (1),
- a winding (2),
- a stack of lamination (3), that is arranged along the winding (2) and supports the winding,
- whereby the stack of lamination (3) is build of electrically insulated lamination plates, and forms an electromagnetically active length along the winding (2),
- an end plate (4),
- whereby the end plate (4) is arranged at an end of the stack of lamination (3) and is connected to the support structure (1),
- whereby the end plate (4) is arranged along the winding (2) and supports the winding,
- whereby the stack of lamination (3) is fixed in its position relative to the support structure (1) by the end plate (4),
- whereby the end plate (4) is laminated and comprises a plurality of lamination plates,
**characterized in that**
- the plurality of lamination plates of the end plate (4) are, at least in the zone adjoining the winding (4), electrically insulated from each other so that they contribute to the electromagnetically active length along the winding (4) of the electric machine.

2. Electric machine according to claim 1, **characterized in that** the plurality of lamination plates of the end plate (4) are glued together to form a rigid end plate (4).

3. Electric machine according to one of the preceding claims, **characterized in that** two end plates (4) at the ends of a stack of lamination (3) are connected by a bolt (5) going through the stack of lamination.

4. Electric machine according to claim 3, **characterized in that** the bolt is electrically insulated from the lamination plates and the end plates (4).

5. Electric machine according to claim 3 or claim 4, **characterized in that** the lamination plates and the end plates (4) comprise a zone that adjoins to the winding (2) and a zone that adjoins to the support structure (1) and that the bolt is arranged in the zone adjoining to the support structure (1).

6. Electric machine according to one of the preceding claims, **characterized in that** the lamination plates of the end plate (4) are of the same shape then the lamination plates of the stack of lamination (2).

7. Electric machine according to one of the preceding claims, **characterized in that** the end plate (4) is a part of a stator of the electric machine.

8. Electric machine according to one of the preceding claims, **characterized in that** the stator is segmented, so that a number of stator segments build the stator of the electric machine.

9. Use of an electric machine according to one of the preceding claims as a generator in a direct driven wind turbine.
